# EUROPÄISCHE PATENTSCHRIFT

(11) **EP 2 574 743 B1**
(45) Veröffentlichungstag und Bekanntmachung des Hinweises auf die Patenterteilung: **04.03.2015**
(21) Anmeldenummer: 12005834.2
(22) Anmeldetag: 11.08.2012
(51) Int. Cl.: F01L 1/047, F01L 1/053

(54) **Motorbaugruppe umfassend einen Lagerbock sowie Verfahren zu deren Montage**
Motor module comprising a bearing block and method for assembling same
Module de moteur comprenant un support de palier ainsi que son procédé de montage

(30) Priorität: 01.10.2011 DE 102011114786
(43) Veröffentlichungstag der Anmeldung: 03.04.2013
(73) Patentinhaber: MAN Truck & Bus AG, 80995 München (DE)
(72) Erfinder: Vogel, Werner, 91595 Burgoberbach (DE)

(56) Entgegenhaltungen:
- EP-A1- 1 956 222
- DE-A1- 10 041 975
- DE-B- 1 263 394
- FR-A1- 2 815 092

## Beschreibung

Die Erfindung betrifft eine Motorbaugruppe bestehend aus einem Grundkörper, einer Welle sowie wenigstens einem Lagerbock wobei der Lagerbock eine Öffnung zur Aufnahme und drehbaren Lagerung der Welle aufweist und der Lagerbock über wenigstens ein Fixiermittel an dem Grundkörper befestigt ist und im Endmontagezustand die Welle drehbar am Grundkörper gelagert ist wobei im Kontaktbereich von Lagerbock und Grundköper wenigstens ein Eingriffselement in einen Gegenelementbereich eingreift.

Aus der Patentschrift DE 12 63 394 geht ein Lagerbock hervor, der über Befestigungsschrauben mit einem Zylinderkopf verbunden ist und damit eine Welle am Zylinderkopf drehbar lagert.

FR 2 815 092 beschreibt eine zweiteiligen Lagerbock für eine Nockenwelle, wobei beide Teile hälftig die Nockenwelle umschließen und über Fixiermittel sowohl zueinander als auch auf einem Grundkörper fixierbar sind.

EP 1 956 222 A1 lehrt eine Nockenwellenbaugruppe und ein Verfahren zur Montage einer solchen, wobei die Lagerböcke eine erste plane Auflagefläche zur Auflage und Befestigung des Lagerbockes an einer Auflagefläche eines Grundkörpers bilden. Ferner ist eine weitere Fläche vorgesehen ist, die plan und als Anlagefläche ausgebildet ist, wobei diese Anlagefläche nicht in derselben Ebene liegt, wie die Auflagefläche. Die Anlagefläche ist im Wesentlichen parallel zur Achse der Bohrung der Lageraufnahme ausgerichtet.

An der Anschlussfläche von Lagerbock und Zylinderkopf können Passstifte angeordnet sein, die in entsprechende Bohrungen des Zylinderkopfes eingreifen und damit die Ausrichtung des Lagerbocks zum Zylinderkopf und des einen Lagerbocks zu weiteren Lagerböcken auf dem Zylinderkopf in deren Längs-, Quer- sowie Winkelausrichtung definiert und zwangsgeführt ausführen.

Der Erfindung liegt die Aufgabe zugrunde, eine Motorbaugruppe mit den Merkmalen des Oberbegriffs des Anspruches 1 bzw. ein Verfahren nach den Merkmalen des Oberbegriffs des Anspruchs 13 derart weiterzubilden, dass die Motorbaugruppe einfacher, schneller und kostengünstiger zu fertigen ist. Ferner ist es Aufgabe der Erfindung das Maß der notwendigen Toleranzen der für die Verbindung von Lagerbock und Grundkörper notwendigen Flächen und/oder Hilfsteilen nach Möglichkeit zu reduzieren sowie eine Montage einer bereits einmal zusammengebaut und zerlegten Motorbaugruppe zu erleichtern.

Diese Aufgabe wird durch die Merkmale des Anspruches 1 und 13 gelöst. Vorteilhafte Weiterbildungen der Erfindungen ergeben sich aus den Unteransprüchen 2 bis 12 sowie 14 und 15.

Als Kern der Erfindung wird es angesehen, dass der Gegenelementbereich zumindest eine als Linie ausgebildete Kante einer Ausnehmung oder eine Linie innerhalb einer Fläche einer Ausnehmung, vorzugsweise einer nutartigen Ausnehmung, aufweist und der Gegenelementbereich und das wenigstens eine Eingriffselement derart ausgebildet sind, dass der Lagerbock und der Grundkörper im zusammengesetzten Zustand und ohne Montage des Fixiermittels, zumindest in einer Richtung entlang der Linie wenigstens über eine Strecke oder Teilstrecke keine Formschlussverbindung bildet. Die Strecke ist damit der mögliche, vorzugsweise in Wellenlängsrichtung zugelassene Verlagerungsweg. Mit diesem "Spiel" oder mit dem Freiheitsgrad kann der Lagerbock vorzugsweise in seiner Querrichtung (parallel zu der Wellenlängsrichtung) verlagert werden. Damit können während der Bewegung von Lagerbock und Grundkörper diese miteinander in Berührung stehen. Insbesondere durch eine linienartige, vorzugsweise nutartige Ausnehmung des Gegenelementbereichs kann dieser einfach gefertigt werden. Durch das "Zulassen" eines Freiheitsgrades zumindest über eine Strecke im zusammengesetzten Zustand von Lagerbock und Grundkörper wird die Toleranzauslegung für zumindest diesen Freiheitsgrad entbehrlich und/oder für die Fertigungsgenauigkeit herabgesetzt. Insbesondere ist es vorteilhaft, wenn die Öffnung und deren Lagerflächen des Lagerbocks hinsichtlich deren Ausrichtung, Winkellage und Position auf das am Lagerbock angeordnete Eingriffselement oder den am Lagerbock angeordneten Gegenelementbereich abgestimmt ist. Damit wird im montierten Zustand mehrerer derartiger Lagerböcke eine definierte Ausrichtung der Öffnungen bzw. der Lagerflächen zueinander gewährleistet.

In einer bevorzugten Ausführungsform sind das Eingriffselement am Lagerbock und der Gegenelementbereich am Grundkörper angeordnet, wobei das Eingriffselement vorzugsweise einstückig mit dem Lagerbock ausgebildet ist. Das Eingriffselement, somit der hervorgehobene Teil des Formschlusses, soll am Lagerbock und der Gegenelementbereich somit die vorzugsweise korrespondierende Ausnehmung, soll am Grundkörper angeordnet sein. Dies ist dahingehend vorteilhaft da der Grundkörper in der Regel das größere Bauteil ist und es eine vereinfachte Fertigung zulässt, wenn die Kontaktflächen des Formschlusses für das hervorgehobene Eingriffselement am Lagerbock und die Kontaktflächen der Ausnehmung am Grundkörper eingebracht werden. Alternativ hierzu können sowohl Lagerbock als auch Grundkörper mit wenigstens einer Ausnehmung versehen sein, wobei ein separates Bauteil in diese Ausnehmungen eingesetzt wird, sodass das separate Bauteil das Eingriffselement bildet und damit im eingesetzten Zustand den Formschluss zwischen Lagerbock und Gegenelementbereich bildet. Zwar sieht diese Ausführung ein weiteres Bauteil vor, jedoch kann damit ein exakt gefertigter Ausnehmungsbereich im Lagerbock und Grundkörper durch beispielsweise ein spanendes Verfahren eingebracht werden. Wobei die Hervorhebung und deren Toleranzen lediglich bei Fertigung des weiteren Bauteils zu berücksichtigen ist.

Auch kann es vorgesehen sein, dass sowohl der Lagerbock als auch der Grundkörper jeweils Hervorhebungen und Ausnehmungen aufweisen, um bspw. eine "verzahnte" Verbindung zu bilden.

In einer weiteren vorteilhaften Weiterbildung der Erfindung ist der Gegenelementbereich geradlinig ausgebildet und der Lagerbock und der Grundkörper im zusammengesetzten Zustand und vor der Montage des Fixiermittels relativ zueinander linear verlagerbar. Insbesondere ein geradliniger Verlauf des Gegenelementbereichs erlaubt eine einfache und schnelle Fertigung des Gegenelementbereichs. Hierbei ist es von Vorteil, wenn die Längsachse des geradlinigen Gegenelementbereichs mit der Längsachse bzw. der Drehachse der Welle im Endmontagezustand einen Winkel α von 0 bis 5° oder bevorzugt ein Winkel von 0° und damit eine parallele Ausrichtung der Längsachse des geradlinigen Gegenelementbereichs mit der Längs- bzw. Drehachse der Welle im Endmontagezustand einschließt. Selbstverständlich ist unter einer parallelen Ausrichtung eine Parallelität zu für diesen Anwendungsbereich üblichen Toleranzen zu verstehen. Beispielsweise beträgt die Parallelität der Längsnut im Zylinderkopf maximal -0,1 bis 0,1 mm, vorzugsweise -0,05 bis 0,05 mm zur Zylinderkopfmitte und/oder zu der Wellenlängsachse bzw. der Wellenlager des Lagerbocks.

Insbesondere der Sonderfall der parallelen Ausrichtung der Längsachse der geraden Linie mit der Längsachse der Welle ist vorteilhaft, da für die Lagerung der Welle insbesondere wenn diese an mehreren Lagerböcken gelagert wird, die Querrichtung und die Winkelausrichtung des Lagerbocks relativ zur Welle kritische und genau zu fertigende Maße umfasst, wo hingegen die Längsposition des Lagerbocks relativ zur Längsachse der Welle als eher unkritisch einzustufen ist, sodass die entbehrte Fertigungstoleranz für den einen Freiheitsgrad und in diesem Fall für die Längsposition des Lagerbocks entbehrt wird, was zur Folge hat, dass die Fertigung der Motorbaugruppe vereinfacht wird und gleichzeitig negative Einflüsse zwischen Lagerbock und Welle durch Maßungenauigkeiten vermieden werden. Zusammenfassend ist festzuhalten, dass für die Längsausrichtung des Lagerbocks vergleichsweise niedrige Ansprüche an die Bauteilposition gelten. Die Quer- und Winkelausrichtung hingegen muss hohen Anforderungen genügen um Zwänge, Klemmen, Kantenträger an den Lagerstellen sicher zu vermeiden.

Für die geometrische Ausgestaltung des Eingriffselements und/oder des Gegenelementbereichs hat es sich als vorteilhaft erwiesen, wenn im Querschnitt die Form der Hervorhebung und/oder der Ausnehmung der eines Dreiecks, eines Vierecks, eines Rechtecks, eines Halbkreises, einer Halbelypse, einer halbovalen Kurve oder eines Trapezes entspricht.

Vorzugsweise verläuft die Querschnittskontur über die Länge des Eingriffselementes und/oder über die Länge des Gegenelementbereichs stetig in gleichbleibender Querschnittsgeometrie und Querschnittsdimension. Zumindest ist dies für den Gegenelementbereich vorteilhaft. So kann beispielsweise der Gegenelementbereich als geradlinige trapezförmige oder halbovale Ausnehmung ausgebildet sein und das Eingriffselement aus zwei vorzugsweise beabstandeten, in einer geraden Linie liegenden Stiften bestehen, die beim zusammensetzen in den trapezförmigen Gegenelementbereich einsetzbar und damit den Lagerbock relativ zum Grundkörper in seiner Querpositionierung und Winkellage ausrichtet bzw. fixiert. Erfindungsgemäß soll zumindest die Ausnehmung eine Linie als Anschlag- und Ausrichtungshilfe aufweisen, die in die Ausnehmung eingreifende Hervorhebung kann als punkt-, linien- und/oder flächenförmige Hervorhebung beschaffen sein, die wenigstens eine Linie, vorzugsweise eine Ebene definiert, die mit der Linie der Ausnehmung korrespondiert, damit eine definierte Ausrichtung von Lagerbock und Grundkörper ermöglicht wird. Durch die Linie oder die Fläche enthaltend die Linie kann eine lagedefinierte Ausrichtung erfolgen.

Vorteilhafterweise ist das Eingriffselement als Hervorhebung ausgebildet, die zu Ihrem freien Ende hin einen sich verjüngenden Bereich aufweist. So kann beispielsweise das Eingriffselement vorzugsweise als Trapez ausgebildet sein, das durch den verjüngten Bereich - in einen trapezförmigen Gegenelementbereich eingesetzt - selbstzentrierend und führend das Zusammenfügen von Lagerbock und Grundkörper erleichtert. Hierzu weist der Gegenelementbereich einen zu seinem freien Ende hin sich vergrößernden Bereich auf wobei der verjüngende Bereich des Eingriffselementes und der sich vergrößernde Bereich des Gegenelementbereichs vorzugsweise zueinander korrespondierend ausgebildet sind.

Im weiteren wird vorgeschlagen, dass das Eingriffselement und/oder der Gegenelementbereich im Endmontagezustand plastisch verformt ist, vorzugsweise bildet das Eingriffselement und der Gegenelementbereich hierbei zusätzlich zu dem Formschluss eine kraftschlüssige Verbindung, sodass das Eingriffselement in dem Gegenelementbereich klemmend oder als Presspassung eingebunden ist. Dies kann insbesondere dadurch erreicht werden, dass für das Eingriffselement ein Material geringerer Härte als für den Gegenelementbereich verwendet wird und/oder dass für das durch entsprechende geometrische Maßnahmen das Eingriffselement eine "gewisse" Nachgiebigkeit aufweist. Auch kann zusätzlich oder alternativ zu obigen, einer der beiden Verbindungspartner eine oberflächliche mechanische, chemische oder thermische Behandlung zur Veränderung der Festigkeit und/oder Härte unterzogen worden sein, auch das Beschichten zumindest eines der beiden Verbindungspartner kann zu einer Veränderung der Festigkeit und/oder Härte führen. Diese Verfahren haben den Vorteil, dass sich der Festigkeitsunterschied lediglich auf den Kontaktbereich beschränkt, sodass die Festigkeitswerte der zusammengesetzten Baugruppe von Grundkörper und Lagerbock insgesamt nicht oder nur zu einem vernachlässigbar geringen Anteil beeinflusst wird.

Vorteilhafterweise wird ein Bereich der Kontur des Gegenelementbereichs und/oder zumindest ein Bereich der Kontur des Eingriffselementes durch ein urformendes und/oder trennendes Fertigungsverfahren gebildet. Insbesondere kann die Hervorhebung bzw. das Eingriffselement durch ein urformendes Verfahren erzeugt werden. So kann beispielsweise ein Lagerbock aus dem Werkstoff Aluminium ausgeführt sein, und kann ferner die Welle direkt aufnehmen. Der Lagerbock kann per Sinter- oder Gussverfahren hergestellt sein. Alle Funktionsflächen mit Ausnahme der Lagerfläche selbst sind vorzugsweise werkzeugfallend und ohne mechanische Bearbeitung ausgeführt, sodass eine schnell und kostengünstig zu fertigender Lagerbock realisierbar ist. Als Gussverfahren wird besonders bevorzugt ein Druckguss- oder ein Feingussverfahren angewandt.

Gemäß einer weiteren Ausgestaltung der Erfindung ist der Grundkörper mit wenigstens einem im wesentlichen eine ebene Kontaktfläche aufweisenden Ansetzbereich versehen, an welchem das Eingriffselement oder der Gegenelementbereich angeordnet ist, wobei der Lagerbock mit einer im wesentlichen korrespondierenden Kontaktfläche ausgebildet ist und die Kontaktfläche des Lagerbocks an die Kontaktfläche des Ansatzbereiches ansetzbar ist. Vorzugsweise sind die beiden Kontaktflächen zueinander korrespondierend ausgebildet.

Insbesondere wenn der Grundkörper mindestens zwei voneinander beabstandete Ansatzbereiche umfasst, wobei die vorzugsweise geradlinigen Gegenelementbereiche oder Eingriffsbereiche der wenigstens zwei Ansatzbereiche einer geraden Linie und/öder parallel zueinander ausgerichtet sind, kann eine einfache und schnelle Fertigung der Gegenelementbereiche oder Eingriffsbereiche an den wenigstens zwei Ansatzbereichen des Grundkörpers erlauben. So kann beispielsweise durch eine derartige Ausgestaltung der Eingriffselemente und/oder Gegenelementbereiche ermöglicht werden, dass durch Einbringung wenigstens zweier nutartiger Gegenelementbereiche wenigstens zwei Kontaktflächen eines Grundkörpers durch eine geradlinige Vorschubbewegung eines spanabhebenden Werkzeuges, vorzugsweise durch einen Scheibenfräser oder ein Sägeblatt, die nutartigen Gegenelementbereiche des Grundkörpers mit minimalem Aufwand herstellbar sind.

Der oben beschriebene Grundkörper ist vorzugsweise als Zylinderkopf oder Kurbelgehäuse und die Welle als Nocken- oder Ausgleichswelle ausgebildet.

Die Mehrzahl der Lagerböcke sind vorzugsweise im Endmontagezustand lediglich durch den Grundkörper (mit Fixierelementen) und die durch sie gelagerte Welle miteinander verbunden, sodass die Quer- und Winkelausrichtung der einzelnen Lagerböcke zueinander durch den Eingriffs- und Gegenelementbereich mit dem Grundkörper fixiert sind und diese Verbindung die Quer- und Winkellage der Lagerböcke zueinander während der Betriebsphase der Welle fixiert. Die Längsausrichtung erfolgt durch die angesetzten und ggf. festgezogenen Fixierelemente (z.B. Schrauben).

Gemäß einer weiteren Ausgestaltung der Erfindung ist der Lagerbock zumindest zweiteilig ausgebildet und umfasst ein Unterteil sowie einen Deckel, wobei die Ausnehmung zur Aufnahme der Welle durch das Unterteil und den Deckel gebildet wird und das wenigstens eine Fixiermittel, den Deckel des Unterteils sowie den Grundkörper miteinander verbindet. In einer bevorzugten Ausführung ist eine Nut-Feder-Verbindung zwischem dem Unterteil und dem Deckel gegeben, wobei dieser Formschluss in Richtung der Linie, bzw. in Richtung der freien Formschlussverbindung des Unterteils mit dem Grundkörper ebenfalls frei ist. Das heißt, dass der Formschluss von Unterteil und Deckel in der gleichen Richtung wie der Formschluss von Unterteil und Grundkörper also in Längsrichtung nicht vorliegt und die Fixierung in Längsrichtung von Unterteil, Deckel und Grundkörper jeweils relativ zueinander durch das Fixiermittel erfolgt.

Grundsätzlich kann zwischen dem Lagerbock und der Welle ein Lagerelement angeordnet sein wie zum Beispiel Lagerhülsen. Diese indirekte Lagerung ist insbesondere bei mehrteiligen Lagerböcken vorteilhaft, da diese durch die Möglichkeit des temporären Abhebens des Deckels in die Öffnung eingelegt werden können.

Neben der Motorbaugruppe selbst umfasst die Erfindung ein Verfahren zur Montage einer in einem Lagerbock aufnehmbaren und drehbar gelagerten Welle an einem Grundkörper wobei der Lagerbock und der Grundkörper ein Eingriffselement und einen Gegenelementbereich aufweisen und der Lagerbock über Fixiermittel mit dem Grundkörper verbunden ist, wobei das Verfahren folgende Schritte ausführt: Bereitstellen eines Lagerbockes, bereitstellen eines mit wenigstens einer Kontaktfläche versehenen Grundkörpers, ansetzen des Lagerbocks an die Kontaktfläche des Grundkörpers wobei während des Zusammenführens von Lagerbock und Grundkörper Eingriffselemente und Gegenelementbereich ineinander eingreifen und sich Lagerbock und Grundkörper hinsichtlich deren Lage in Querrichtung zur Welle und hinsichtlich der Winkelausrichtung zueinander ausrichten. Bevor der Lagerbock auf dem Grundkörper durch das Anbringen und Festziehen von Fixiermitteln, vorzugsweise von Schrauben, befestigt wird ist eine Ausrichtung des Lagerbocks längs zur Wellenachse auf dem Grundkörper durch Verschieben des Lagerbocks entlang der Wellenlängsachse möglich. Durch Befestigung der Fixiermittel wird die Position in Längsrichtung von Grundkörper und Lagerbock fixiert.

Während der Einbringung des wenigstens einen Fixiermittels und dessen Festziehen, erfolgt vorzugsweise eine elastische oder plastische Verformung des Eingriffselementes und/oder des Gegenelementbereichs. Durch die plastische Verformung des Eingriffselements und/oder des Gegenelementbereichs kann ein Wiederzusammensetzen nach deren erstmaligen Zusammensetzen und Zerlegens begünstigt werden. Durch die plastische Verformung wird eine exakte, reproduzierbare und lagegenaue Zusammenfügung von Lagerbock und Grundkörper ermöglicht, da nach dem erstmaligen Festziehen und der erstmaligen plastischen Verformung von Eingriffselement und/oder Gegenelementbereich die Struktur der gegenüberliegenden Elemente diesen aufgeprägt wird. Der plastischen Verformung ist im Regelfall eine elastische Verformung zwingend vorgeschalten. Streng genommen ist eine plastische Verformung als eine elastisch-plastische Verformung zu sehen. Der für die bessere Wiedermontage vorteilhafte Umstand liegt jedoch in der plastischen Verformung. Durch die plastische Verformung ergibt sich ein Memory-Effekt, der die Ausrichtung der beiden Verbindungspartner "speichert" und diese Information beim Wiederzusammenbau nutzt und einen wiederholgenauen Wiederzusammenbau gewährleistet.

Auch eine allein elastische Verformung bei der Zusammensetzung ist gegenüber der im Stand der Technik verbreiteten Ausrichtung des Lagerbocks auf einem Grundköper mittels Passstiften von Vorteil, da die Passstifte mit einem Spiel versehen sind. In dem erfindungsgemäßen, zumindest eine elastische Verformung umfassenden Formschluss ist hingegen eine spielfreie und damit exaktere Verbindung gegeben.

Das wenigstens eine am Lagerbock angeordnete Eingriffselement oder der wenigstens eine am Lagerbock angeordnete Gegenelementbereich kann mit einer Ausnehmung zur Aufnahme des Fixiermittels zusammenfallen. Also könnte die Bohrung zur Aufnahme der Schraube zum befestigen des Lagerbocks auf dem Grundkörper sich durch eine als Eingriffselement dienende Hervorhebung des Lagerbocks erstrecken.

Vorzugsweise sind die mehreren Lagerböcke die an einen Grundkörper zu montieren sind als Gleichteile konzipiert, so dass ein Monteur keine gezielte Montage einzelner Lagerböcke an die jeweiligen Ansetzbereiche erfolgen muss. Sollte dies jedoch erforderlich sein, so können die am Lagerbock angeordneten Eingriffselemente und/oder Gegenelementbereiche der einzelnen Lagerböcke derart unterschiedlich ausgebildet sein, dass diese nur eine zumindest offensichtlich passende Zuordnung einzelner Lagerböcke an definierte Ansetzbereiche zulassen. Einfach könnte dies durch eine zueinander parallel, jedoch in deren Anordnung an den Lagerböcken versetzten Positionierung erfolgen. Damit erhalten die Eingriffselemente und/oder Gegenelementbereiche eine weitere Funktion, nämlich die der definierten Zuordnung einzelner Lagerböcke an jeweilige Ansetzbereiche innerhalb eines Grundkörpers.

Die Erfindung ist anhand von Ausführungsbeispielen in den Zeichnungsfiguren näher erläutert.

Diese zeigen
- Fig. 1:: eine schematische perspektivische Darstellung einer Nockenwelle die über Lagerböcke an einem Zylinderkopf montiert sind;
- Fig. 2:: eine schematische perspektivische Darstellung gemäß Fig. 1 ohne Nockenwelle und Lagerbock;

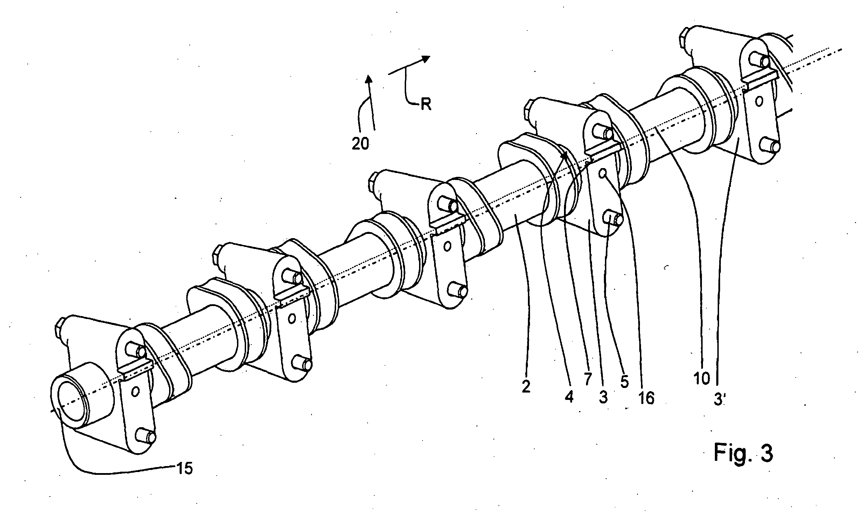

- Fig. 3:: eine schematische perspektivische Darstellung einer Nockenwelle mit den erfindungsgemäßen Lagerböcken;

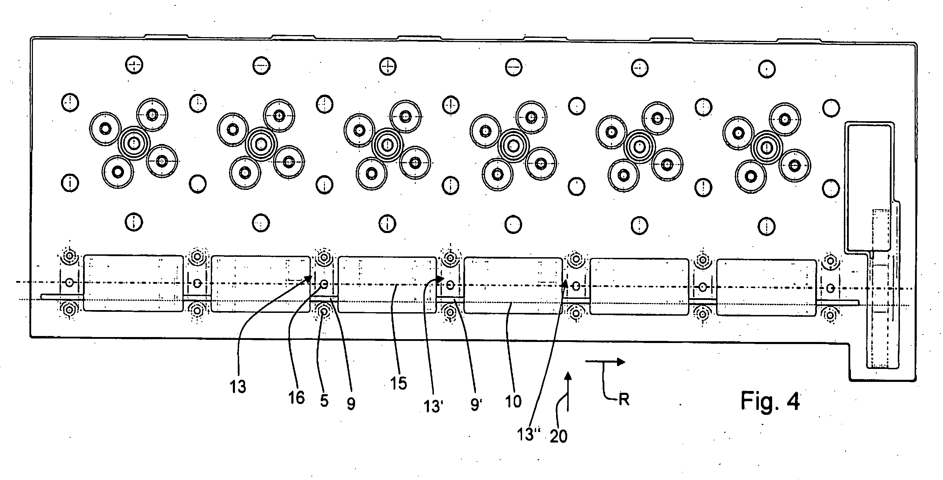

- Fig. 4:: eine schematische Draufsicht auf einen Zylinderkopf;

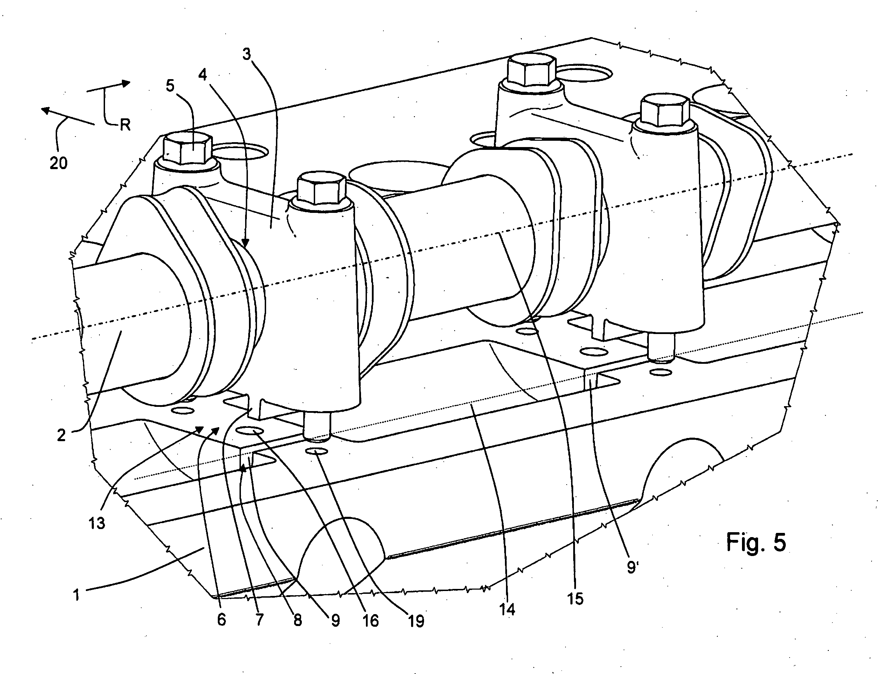

- Fig. 5:: eine schematische perspektivische Detaildarstellung zweier mit einer Nockenwelle versehenen Lagerböcke in einer beabstandeten Position zum Zylinderkopf;
- Fig. 6:: eine schematische Schnittdarstellung eines mit einer Nockenwelle versehenen Lagerbocks in einer von dem Zylinderkopf beabstandeten Position;
- Fig. 7:: eine schematische Schnittdarstellung von Lagerbock, Nockenwelle, Schrauben und Zylinderkopf in Endmontagestellung;

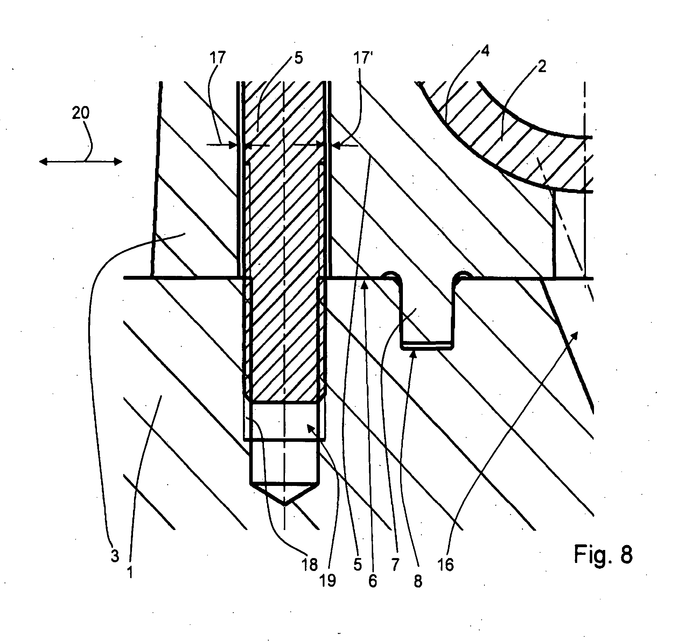

- Fig. 8:: eine schematische Detaildarstellung gemäß Detail A aus Fig. 7;

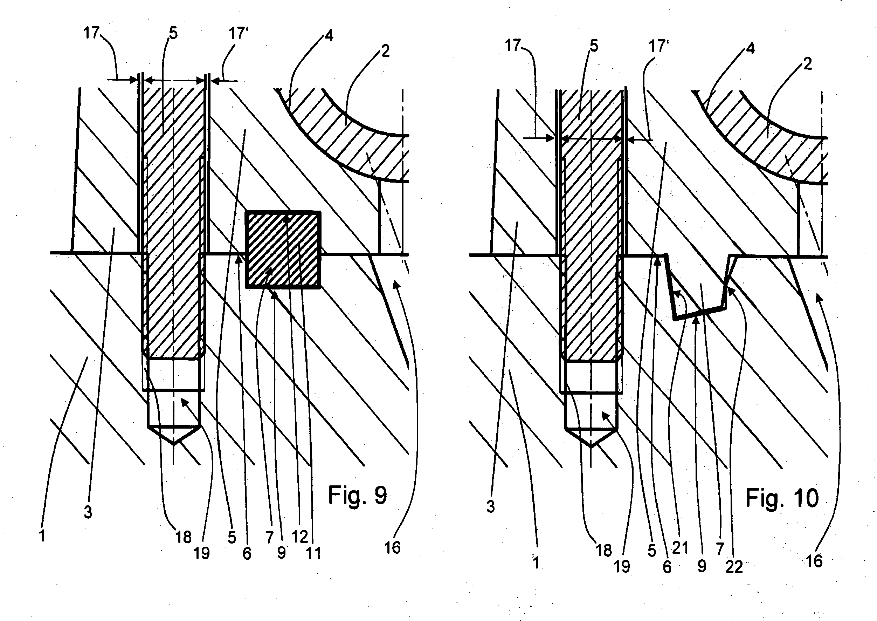

- Fig. 9:: eine schematische Detailsdarstellung einer alternativen Ausführung zu Figur 8;
- Fig. 10:: eine schematische Detaildarstellung gemäß einer weiteren alternativen Ausführungsform zu Figur 9.

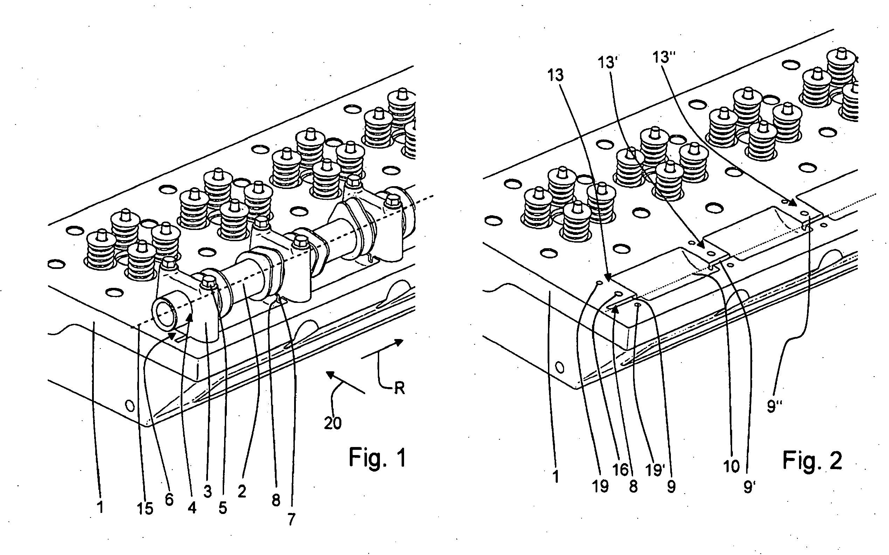

In den nachfolgenden Zeichnungsfiguren ist der Erfindungsgegenstand anhand einer auf einen Zylinderkopf montierten Nockenwelle exemplarisch dargestellt. Dabei ist der Grundkörper 1 als Zylinderkopf und die Welle 2 als Nockenwelle ausgebildet und über den Lagerbock 3 auf dem Grundkörper 1 befestigt. Der Lagerbock 3 ist mit einer Öffnung 4 versehen, in welcher die Welle 2 drehbar gelagert ist. Ferner ist der Lagerbock 3 über Fixierelemente 5 an dem Grundkörper 1 befestigt. In dem in Figur 1 dargestellten Endmontagezustand ist am Kontaktbereich 6 von Lagerbock 3 und Grundkörper 1 ein Eingriffselement 7 vorgesehen, welches in einen Gegenelementbereich 8 eingreift. Der als Ausnehmung 9 ausgebildete Gegenelementbereich 8 weist eine Linie 10 innerhalb einer Fläche in der nutartigen Ausnehmung 9 auf. Der Gegenelementbereich 8 und das Eingriffselement 7 sind derart ausgebildet, dass der Lagerbock 3 und der Grundkörper 1 im zusammengesetzten Zustand und vor der Montage bzw. ohne dem Ansetzen von Fixiermitteln 5 zumindest in einer Richtung R entlang der Linie 10 keinen Formschluss bilden. Damit bildet zumindest die Richtung R der Linie 10 einen Freiheitsgrad für die Verbindung des Lagerbocks 3 auf dem Grundkörper 1. Die Freiheitsgradbetrachtung erfolgt hierbei ohne Berücksichtigung etwaiger kraftschlüssiger Verbindungsanteile, bspw. eines Klemmsitz. In den dargestellten Ausführungen ist der Gegenelementbereich 8 geradlinig ausgebildet und damit der Lagerbock 3 relativ zum Grundkörper 1 im zusammengesetzten Zustand und ohne Montage des Fixiermittels 5 entlang der geraden Linie 10 formschlussfrei.

Das Eingriffselement 7 ist als prismatische Hervorhebung am Lagerbock 3 angeordnet und der Gegenelementbereich 8 ist am Grundkörper 1 als entsprechende nutartige Ausnehmung 9 ausgebildet wobei das Eingriffselement 7 einstückig mit dem Lagerbock 3 ausgebildet ist. Eine Alternative hierzu ist aus Zeichnungsfigur 9 ersichtlich, in der das Eingriffselement 7 als separates Bauteil 11 einerseits in die Ausnehmung 9 des Grundkörpers 1 und andererseits in die Materialaussparung 12 des Lagerbocks 3 einsetzbar ist und dabei eine ebenfalls in einem Freiheitsgrad entlang der Linie 10 (hier: senkrecht aus der Zeichnungsebene) verlagerbare bzw. diesen Freiheitsgrad offen haltende Verbindung bildet. Das separate Bauteil 11 muss nicht zwangsläufig die dargestellte Querschnittskontur haben, so kann es auch die Form eines Dreiecks, eines Vierecks, eines Rechtecks, eines n-Ecks, eines Halbkreises, einer Halbellipse, einer halbovalen Kurve oder eines Trapezes aufweisen. Vorzugsweise kann das separate Bauteil 11 als Rundstab geformt sein, der in einer korrespondierend gerundeten Ausnehmung 9 und/oder Materialaussparung 12 einliegt (nicht dargestellt).

Der Grundkörper 1 ist mit mehreren voneinander beabstandeten Ansetzbereichen 13, 13', 13" versehen, die jeweils eine Ausnehmung 9 aufweisen. Die jeweiligen Ausnehmungen 9, 9', 9" liegen dabei in einer Flucht auf der geraden Linie 10. Alternativ kann es auch ausreichend sein, wenn die Ausnehmungen 12,12' zumindest zueinander parallel ausgerichtet sind oder wenigstens die zumindest eine Linie 10, an der die Ausrichtung der Lagerböcke 3 erfolgt zueinander parallel verlaufen. Damit wird eine parallele bzw. in deren Winkellage definierte, vorzugsweise gleiche Ausrichtung der mehreren Lagerböcke 3 erreicht. Insbesondere aus den Zeichnungsfiguren 2 und 4 ist die Ausrichtung der Ausnehmung 9, 9', 9" in einer Flucht, vorzugsweise deckungsgleich, zueinander erkennbar. Dies ist besonders dann von Vorteil, wenn die Längsachse 14 und damit die Linie 10 des geradlinigen Gegenelementbereichs 8 mit der Längsachse 15 der Welle 2 im Endmontagezustand ein Winkel von 0° einschließt. Mit anderen Worten ist in der dargestellten bevorzugten Ausführungsform die Längsachse 15 der Welle 2 parallel zu der Linie 10 bzw. zur Längsachse 14 der Ausnehmung 9 ausgerichtet. Auch kann das separate Bauteil 11, wie oben allgemein für das Eingriffselement beschrieben, mit einer sich zum freien Ende hin gebildeten Verjüngung versehen sein (nicht dargestellt).

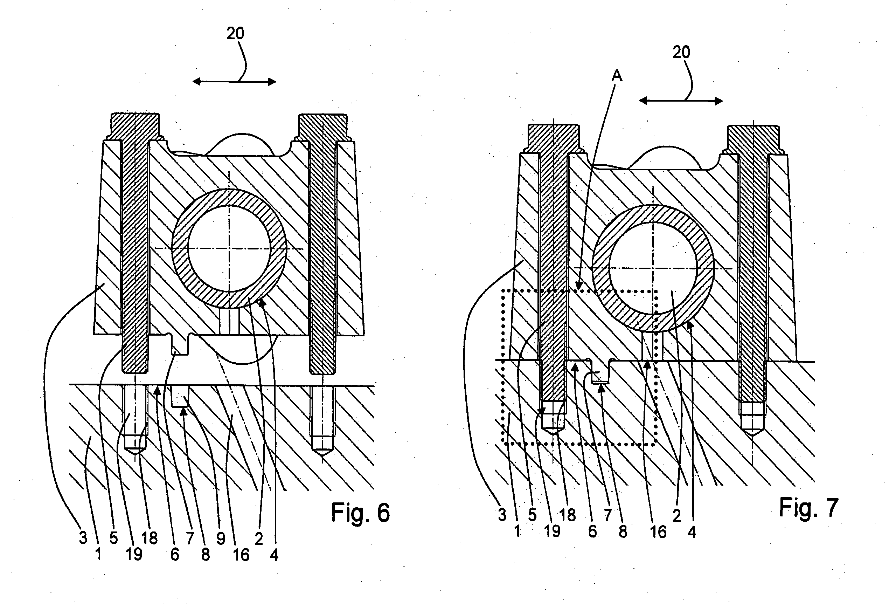

In den Zeichnungsfiguren 6 bis 10 ist die Verbindung des Lagerbocks 3 mit dem Grundkörper 1 im Vollschnitt dargestellt. Dabei ist ferner erkennbar, dass durch einen im Grundkörper 1 verlaufenden und sich im Lagerbock 3 fortsetzenden Kanal 16, eine Zuführung eines Schmiermittels zu der Welle 2 ermöglicht wird. Dieser Kanal 16 wird durch die Verbindung des Lagerbocks 3 mit dem Grundkörper 1 geschlossen, vergleiche Figuren 6 und 7. In Zeichnungsfigur 8 ist eine Detaildarstellung des Lagerbocks 3 mit dem Grundkörper 1 gemäß dem punktierten Detailausschnitt A aus Figur 7 dargestellt. Hierbei ist erkennbar, dass das als Schraube ausgebildete Fixiermittel 5 innerhalb des Lagerbocks 3 mit einem Spiel 17, 17' versehen ist und in eine mit einem Innengewinde 18 versehenen Sacklochbohrung 19 im Grundkörper 1 eingreift. Dadurch dass das Fixiermittel 5 innerhalb des Lagerbocks 3 eine geringfügige Beweglichkeit in Achsquerrichtung 20 aufweist, erfolgt die Ausrichtung des Lagerbocks 3 quer zur Wellenachse 15 des Lagerbocks 3 und relativ zum Grundkörper 1 über das Eingriffselement 7 und dem entsprechenden Gegenelementbereich 8.

In den Zeichnungsfiguren 6 bis 8 ist das Eingriffselement 7 als im Querschnitt rechteckig bis leicht prismatisch ausgebildeter Zapfen gestaltet, der in eine ähnlich dimensionierte und geometrisch ähnlich geformte Ausnehmung 9 eingreift. In Zeichnungsfigur 10 ist das Eingriffselement 7 an einer ersten Seitenfläche mit einer Anlage- und Ausrichtfläche 21 und an einer der ersten gegenüberliegenden Seitenfläche mit einer Andrückfläche bzw. Andrücklinie 22 versehen. Zur exakten Ausrichtung hinsichtlich der Achsquerrichtung 20 und der Winkellage dient die Ausrichtfläche 21, an welche der Lagerbock 3 bei Einsetzen des Lagerbocks 3 in die Ausnehmung 9 durch entsprechenden Druckaufbau durch die Andruckfläche 22 erfolgt.

Während des Ansetzens und Festziehens der Fixiermittel 5, 5' im in Figur 6 und 7 dargestellten Montageschritt erfolgt vorzugsweise eine plastische (zeichnerisch nicht dargestellte) Verformung im Bereich des Eingriffselements 7 und/oder im Bereich des Gegenelementbereichs 8, sodass eine kraftschlüssige und/oder klemmende Verbindung ergibt.

### BEZUGSZEICHENLISTE

- A: Detail
- R: Richtung
- 1: Grundkörper
- 2: Welle
- 3, 3': Lagerbock
- 4: Öffnung
- 5: Fixiermittel
- 6: Kontaktbereich
- 7: Eingriffselement
- 8: Gegenelementbereich
- 9, 9', 9": Ausnehmung
- 10: Linie
- 11: Bauteil
- 12: Ausnehmung
- 13, 13', 13": Ansetzbereich
- 14: Längsachse
- 15: Längsachse v. 2
- 16: Kanal
- 17, 17': Spiel
- 18: Innengewinde
- 19, 19': Bohrung
- 20: Achsquerrichtung v. 2
- 21: Ausrichtfläche
- 22: Andruckfläche/-linie

## Patentansprüche

1. Motorbaugruppe bestehend aus einem Grundkörper (1), einer Welle (2) sowie wenigstens einem Lagerbock (3), wobei der Lagerbock (3) eine Öffnung (4) zur Aufnahme und drehbaren Lagerung der Welle (2) aufweist wobei der Lagerbock (3) über wenigstens ein Fixiermittel (5) an dem Grundkörper (1) befestigt ist und im Endmontagezustand die Welle drehbar am Grundkörper gelagert ist wobei im Kontaktbereich (6) von Lagerbock (3) und Grundkörper (1) wenigstens ein Eingriffselement (7) in einen Gegenelementbereich (8) eingreift, wobei der Gegenelementbereich (8) zumindest eine als Linie (10) ausgebildete Kante einer Ausnehmung (9) oder eine Linie (10) innerhalb einer Fläche einer Ausnehmung (9), vorzugsweise in einer nutartigen Ausnehmung (9), aufweist und der Gegenelementbereich (8) und das wenigstens eine Eingriffselement (7) derart ausgebildet sind, dass der Lagerbock (3) und der Grundkörper (1) im zusammengesetzten Zustand und ohne Montage des Fixiermittels (5) zumindest in einer Richtung entlang der Linie (10) keine Formschlussverbindung bildet, **dadurch gekennzeichnet, dass** das Eingriffselement (7) und/oder der Gegenelementbereich (8) während des erstmaligen Montierens elastisch und/oder plastisch verformbar ist/sind.

2. Motorbaugruppe nach einem der vorhergehenden Ansprüche, **dadurch gekennzeichnet, dass** das Eingriffselement (7) am Lagerbock (3) und der Gegenelementbereich (8) am Grundkörper (1) angeordnet ist wobei das Eingriffselement (7) vorzugsweise einstückig mit dem Lagerbock (3) ausgebildet oder das Eingriffselement (7) als separates Bauteil (11) in eine Materialaussparung (12) des Lagerbocks (3) einsetzbar ist.

3. Motorbaugruppe nach Anspruch 1 oder 2, **dadurch gekennzeichnet, dass** der Gegenelementbereich (8) geradlinig ausgebildet ist und das zwischen Lagerbock (3) und Grundkörper (1) im zusammengesetzten Zustand und ohne Montage des Fixiermittels (5) entlang der geraden Linie (10) kein Formschluss besteht.

4. Motorenbaugruppe nach Anspruch 3, **dadurch gekennzeichnet, dass** die Längsachse (14) des geradlinigen Gegenelementbereichs (8) mit der Längsachse (15) der Welle (2) im Endmontagezustand einen Winkel α von 0° bis 5°, besonders bevorzugt einen Winkel von 0° einschließt und damit parallel verläuft.

5. Motorbaugruppe nach einem der vorhergehenden Ansprüche, **dadurch gekennzeichnet, dass** das Eingriffselement (7) und/oder der Gegenelementbereich (8) im Querschnitt die Form eines Dreiecks, eines Vierecks, eines Rechtecks, eines Halbkreises, einer Halbellipse, einer halbovalen Kurve oder besonders bevorzugt die Form eines Trapezes aufweist.

6. Motorbaugruppe nach einem der vorhergehenden Ansprüche, **dadurch gekennzeichnet, dass** das Eingriffselement (7) als Hervorhebung ausgebildet ist und einen im Endmontagezustand zum Gegenelementbereich (8) gerichteten, sich zum Gegenelementbereich (8) hin verjüngenden Bereich aufweist.

7. Motorbaugruppe nach einem der vorhergehenden Ansprüche, **dadurch gekennzeichnet, dass** das Eingriffselement (7) und der Gegenelementbereich (8) eine kraftschlüssige und/oder klemmende Verbindung eingehen, hierbei weisen das Eingriffselement (7) und der Gegenelementbereich (8) besonders bevorzugt Materialen unterschiedlicher Härte und/oder Festigkeit auf.

8. Motorbaugruppe nach einem der vorhergehenden Ansprüche, **dadurch gekennzeichnet, dass** zumindest ein Bereich der Kontur des Gegenelementbereichs (8) und/oder zumindest ein Bereich der Kontur des Eingriffselementes (7) durch ein Urformendes und/oder trennendes Fertigungsverfahren gebildet werden.

9. Motorbaugruppe nach einem der vorhergehenden Ansprüche, **dadurch gekennzeichnet, dass** der Grundkörper (1) wenigstens einen im Wesentlichen eine ebene Kontaktfläche aufweisenden Ansetzbereich (13, 13', 13") umfasst, an welchem das Eingriffselement (7) oder der Gegenelementbereich (8) angeordnet ist wobei der Lagerbock (3) mit einer im Wesentlichen korrespondierenden Kontaktfläche ausgebildet ist und die Kontaktfläche des Lagerbocks (3) an die Kontaktfläche des Ansetzbereiches (13, 13', 13") ansetzbar ist.

10. Motorbaugruppe nach Anspruch 9, **dadurch gekennzeichnet, dass** der Grundkörper (1) mindestes zwei voneinander beabstandete Ansetzbereiche (13, 13', 13") umfasst, wobei die geradlinigen Gegenelementbereiche oder Eingriffselemente der wenigstens zwei Ansetzbereiche (13, 13', 13") in einer geraden Linie (10) und/oder parallel zueinander angeordnet sind.

11. Motorbaugruppe nach einem der vorhergehenden Ansprüche, **dadurch gekennzeichnet, dass** der Grundkörper (1) als Zylinderkopf und die Welle (2) als Nocken- oder Ausgleichswelle und/oder der Grundkörper (1) als Zylinderkopf und die Welle (2) als Kipphebelachse ausgebildet ist.

12. Motorbaugruppe nach einem der vorhergehenden Ansprüche, **dadurch gekennzeichnet, dass** der Lagerbock (3) zumindest zweiteilig ausgebildet ist und ein Unterteil sowie einen Deckel aufweist, wobei die Öffnung (4) zur Aufnahme der Welle durch das Unterteil und den Deckel gebildet wird und das wenigstens eine Fixiermittel (5) den Deckel, das Unterteil sowie den Grundkörper (1) miteinander verbindet
wobei vorzugsweise die Berührflächen von Deckel und Unterteil mit einer Nut- und Federverbindung einen Formschluss eingehen und der Formschluss entlang der Linie (10) keine Formschlussverbindung bildet.

13. Verfahren zur Montage einer in einem Lagerbock (3) aufnehmbaren und drehbar gelagerten Welle (2) an einem Grundkörper (1) wobei der Lagerbock (3) und der Grundkörper (1) ein Eingriffselement (7) und einen Gegenelementbereich (8) aufweisen und der Lagerbock (3) über Fixiermittel (5) mit dem Grundkörper (1) verbunden ist wobei das Verfahren folgende Schritte umfasst:
- Bereitstellen eines Lagerbocks (3),
- Bereitstellen eines mit wenigstens einer Kontaktfläche versehenen Grundköpers (1),
- Ansetzten des Lagerbocks (3) an die Kontaktfläche (6) des Grundkörpers (1) wobei während des Zusammenführens von Lagerbock (3) und Grundkörper (1) Eingriffselement (7) und Gegenelementbereich (8) ineinander eingreifen und sich Lagerbock (3) und Grundkörper (1) hinsichtlich deren Lage in Querrichtung (20) zur Welle (2) und hinsichtlich der Winkelausrichtung definiert zueinander ausrichten,
- Ausrichten des Lagerbocks (3) entlang der Längsachse (15) der Welle (2) auf dem Grundkörper (1) durch Verschiebung des Lagerbocks (3),
- Befestigen des Lagerbocks (3) auf dem Grundköper (1) und fixieren der Position in Längsausrichtung (15) von Grundkörper (1) und Lagerbock (3) durch einbringen wenigstes eines Fixiermittels 5
**gekennzeichnet durch**
elastisches und/oder plastisches Verformen des Eingriffselementes (7) und/oder des Gegenelementbereichs (8) während des erstmaligen Festziehens des wenigstens einen Fixiermittels 5.

14. Verfahren zur Fertigung eines Grundkörpers nach einem der Ansprüche 1 bis 13 **gekennzeichnet durch** Einbringen wenigstens zweier nutartiger Gegenelementbereiche (8) in wenigstens zwei unterschiedliche Kontaktflächen (6) und/oder Ansetzbereichen (13, 13', 13") eines Grundkörpers (1) **durch** eine geradlinige Vorschubbewegung eines spanabhebenden Werkzeugs, vorzugsweise ist das spanabhebende Werkzeug ein Scheibenfräsers, ein Sägeblatt oder ein diesem ähnliches Werkzeug.

## Claims

1. An engine module consisting of a basic body (1), a shaft (2) and at least one bearing block (3), the bearing block (3) having an opening (4) for receiving and rotatably mounting the shaft (2), the bearing block (3) being fastened via at least one fixing means (5) to the basic body (1), and the shaft being mounted rotatably on the basic body in the final mounted state, at least one engagement element (7) engaging in a counter-element region (8) in the contact region (6) of the bearing block (3) and the basic body (1), the counter-element region (8) having at least one edge, configured as a line (10), of a recess (9) or a line (10) within a surface of a recess (9), preferably in a groove-like recess (9), and the counter-element region (8) and the at least one engagement element (7) being configured in such a way that, in the assembled state and without mounting of the fixing means (5), the bearing block (3) and the basic body (1) do not form a positively locking connection at least in a direction along the line (10), **characterized in that** the engagement element (7) and/or the counter-element region (8) are/is deformable elastically and/or plastically during first-time mounting.

2. The engine module according to the preceding claim, **characterized in that** the engagement element (7) is arranged on the bearing block (3) and the counter-element region (8) is arranged on the basic body (1), the engagement element (7) preferably being configured in one piece with the bearing block (3) or it being possible for the engagement element (7) to be inserted as a separate component (11) into a material cut-out (12) of the bearing block (3).

3. The engine module according to Claim 1 or 2, **characterized in that** the counter-element region (8) is of rectilinear configuration, and **in that** there is no positively locking fit between the bearing block (3) and the basic body (1) in the assembled state and without mounting of the fixing means (5) along the straight line (10).

4. The engine module according to Claim 3, **characterized in that** the longitudinal axis (14) of the rectilinear counter-element region (8) encloses, with the longitudinal axis (15) of the shaft (2) in the final mounted state, an angle a of from 0° to 5°, particularly preferably encloses an angle of 0° and therefore runs in parallel.

5. The engine module according to one of the preceding claims, **characterized in that** the engagement element (7) and/or the counter-element region (8) have/has the shape in cross section of a triangle, a square, a rectangle, a semicircle, a half-ellipse, a half-oval curve or particularly preferably the shape of a trapezium.

6. The engine module according to one of the preceding claims, **characterized in that** the engagement element (7) is configured as an elevation and has a region which is directed towards the counter-element region (8) in the final mounted state and tapers towards the counter-element region (8).

7. The engine module according to one of the preceding claims, **characterized in that** the engagement element (7) and the counter-element region (8) enter into a non-positive and/or clamping connection, the engagement element (7) and the counter-element region (8) particularly preferably having materials of different hardness and/or strength here.

8. The engine module according to one of the preceding claims, **characterized in that** at least one region of the contour of the counter-element region (8) and/or at least one region of the contour of the engagement element (7) are/is formed by way of a primary forming and/or cutting manufacturing process.

9. The engine module according to one of the preceding claims, **characterized in that** the basic body (1) comprises at least one attachment region (13, 13', 13") which has substantially a planar contact face and on which the engagement element (7) or the counter-element region (8) is arranged, the bearing block (3) being configured with a substantially corresponding contact face, and it being possible for the contact face of the bearing block (3) to be attached to the contact face of the attachment region (13, 13', 13").

10. The engine module according to Claim 9, **characterized in that** the basic body (1) comprises at least two attachment regions (13, 13', 13'') which are spaced apart from one another, the rectilinear counter-element regions or engagement elements of the at least two attachment regions (13, 13', 13'') being arranged in a straight line (10) and/or parallel to one another.

11. The engine module according to one of the preceding claims, **characterized in that** the basic body (1) is configured as a cylinder head and the shaft (2) is configured as a camshaft or balancing shaft and/or the basic body (1) is configured as a cylinder head and the shaft (2) is configured as a rocker arm pivot.

12. The engine module according to one of the preceding claims, **characterized in that** the bearing block (3) is configured at least in two pieces and has a lower part and a cover, the opening (4) for receiving the shaft being formed by the lower part and the cover, and the at least one fixing means (5) connecting the cover, the lower part and the basic body (1) to one another, the contacting faces of the cover and the lower part preferably entering into a positively locking fit with a tongue and groove connection, and the positively locking fit along the line (10) not forming a positively locking connection.

13. A method for mounting a shaft (2) on a basic body (1), which shaft (2) can be received in a bearing block (3) and is mounted rotatably, the bearing block (3) and the basic body (1) having an engagement element (7) and a counter-element region (8), and the bearing block (3) being connected via fixing means (5) to the basic body (1), the method comprising the following steps:
- provision of a bearing block (3),
- provision of a basic body (1) which is provided with at least one contact face,
- attachment of the bearing block (3) to the contact face (6) of the basic body (1), the engagement element (7) and the counter-element region (8) engaging into one another during the joining together of the bearing block (3) and the basic body (1), and the bearing block (3) and the basic body (1) being oriented in a defined manner with respect to one another with regard to their position in the transverse direction (20) with respect to the shaft (2) and with regard to the angular orientation,
- orientation of the bearing block (3) along the longitudinal axis (15) of the shaft (2) on the basic body (1) by way of displacement of the bearing block (3),
- fastening of the bearing block (3) on the basic body (1) and fixing of the position in the longitudinal orientation (15) of the basic body (1) and the bearing block (3) by way of the introduction of at least one fixing means (5), **characterized by**
elastic and/or plastic deformation of the engagement element (7) and/or the counter-element region (8) during first-time tightening of the at least one fixing means (5).

14. The method for manufacturing a basic body according to one of Claims 1 to 13, **characterized by** the introduction of at least two groove-like counter-element regions (8) into at least two different contact faces (6) and/or attachment regions (13, 13', 13") of a basic body (1) by way of a rectilinear advancing movement of a cutting tool, the cutting tool preferably being a side milling cutter, a saw blade or a tool which is similar thereto.

## Revendications

1. Module de moteur constitué d'un corps de base (1), d'un arbre (2) ainsi que d'au moins un support de palier (3), le support de palier (3) comprenant une ouverture (4) pour la réception et le montage à rotation de l'arbre (2), le support de palier (3) étant fixé au corps de base (1) par le biais d'au moins un moyen de fixation (5) et l'arbre étant monté à rotation sur le corps de base à l'état de montage final, au moins un élément d'engagement (7) s'engageant dans une région d'élément conjugué (8) dans la région de contact (6) du support de palier (3) et du corps de base (1), la région d'élément conjugué (8) comprenant au moins une arête, réalisée en tant que ligne (10), d'un évidement (9) ou une ligne (10) à l'intérieur d'une surface d'un évidement (9), de préférence dans un évidement (9) de type rainure et la région d'élément conjugué (8) et l'au moins un élément d'engagement (7) étant réalisés de telle sorte que le support de palier (3) et le corps de base (1), à l'état assemblé et sans montage du moyen de fixation (5), ne forment aucune liaison par engagement par complémentarité de formes au moins dans une direction le long de la ligne (10), **caractérisé en ce que** l'élément d'engagement (7) et/ou la région d'élément conjugué (8) est/sont déformable(s) élastiquement et/ou plastiquement pendant le premier montage.

2. Module de moteur selon la revendication précédente, **caractérisé en ce que** l'élément d'engagement (7) est disposé sur le support de palier (3) et la région d'élément conjugué (8) est disposée sur le corps de base (1), l'élément d'engagement (7) étant réalisé de préférence d'un seul tenant avec le support de palier (3) ou l'élément d'engagement (7) pouvant être inséré, en tant que composant séparé (11), dans un évidement de matériau (12) du support de palier (3).

3. Module de moteur selon la revendication 1 ou 2, **caractérisé en ce que** la région d'élément conjugué (8) est réalisée de manière rectiligne, et **en ce qu'**il n'existe aucun engagement par complémentarité de formes le long de la ligne droite (10) entre le support de palier (3) et le corps de base (1) à l'état assemblé et sans montage du moyen de fixation (5).

4. Module de moteur selon la revendication 3, **caractérisé en ce que** l'axe longitudinal (14) de la région d'élément conjugué rectiligne (8) forme avec l'axe longitudinal (15) de l'arbre (2) à l'état de montage final un angle α de 0° à 5°, de manière particulièrement préférée un angle de 0°, et s'étend par conséquent parallèlement à celui-ci.

5. Module de moteur selon l'une quelconque des revendications précédentes, **caractérisé en ce que** l'élément d'engagement (7) et/ou la région d'élément conjugué (8) présente(nt) en section transversale la forme d'un triangle, d'un quadrilatère, d'un rectangle, d'un demi-cercle, d'une demi-ellipse, d'une courbe semi-ovale ou de manière particulièrement préférée la forme d'un trapèze.

6. Module de moteur selon l'une quelconque des revendications précédentes, **caractérisé en ce que** l'élément d'engagement (7) est réalisé sous forme de relief et comprend une région se rétrécissant en direction de la région d'élément conjugué (8) et orientée vers la région d'élément conjugué (8) à l'état de montage final.

7. Module de moteur selon l'une quelconque des revendications précédentes, **caractérisé en ce que** l'élément d'engagement (7) et la région d'élément conjugué (8) réalisent une liaison par force et/ou par serrage, et l'élément d'engagement (7) et la région d'élément conjugué (8) comprennent en l'occurrence, de manière particulièrement préférée, des matériaux de dureté et/ou de résistance différentes.

8. Module de moteur selon l'une quelconque des revendications précédentes, **caractérisé en ce qu'**au moins une région du contour de la région d'élément conjugué (8) et/ou au moins une région du contour de l'élément d'engagement (7) est/sont formée(s) au moyen d'un procédé de fabrication par formage primaire et/ou par séparation.

9. Module de moteur selon l'une quelconque des revendications précédentes, **caractérisé en ce que** le corps de base (1) comporte au moins une région d'application (13, 13', 13'') comprenant essentiellement une surface de contact plane, sur laquelle région d'application est disposé(e) l'élément d'engagement (7) ou la région d'élément conjugué (8), le support de palier (3) étant réalisé avec une surface de contact essentiellement correspondante et la surface de contact du support de palier (3) pouvant être appliquée contre la surface de contact de la région d'application (13, 13', 13'').

10. Module de moteur selon la revendication 9, **caractérisé en ce que** le corps de base (1) comporte au moins deux régions d'application (13, 13', 13'') espacées l'une de l'autre, les régions d'élément conjugué rectilignes ou les éléments d'engagement des au moins deux régions d'application (13, 13', 13") étant disposé(e)s sur une ligne droite (10) et/ou parallèlement les un(e)s aux autres.

11. Module de moteur selon l'une quelconque des revendications précédentes, **caractérisé en ce que** le corps de base (1) est réalisé sous forme de tête de cylindre et l'arbre (2) est réalisé sous forme d'arbre à cames ou d'équilibrage et/ou le corps de base (1) est réalisé sous forme de tête de cylindre et l'arbre (2) est réalisé sous forme d'axe de culbuteur.

12. Module de moteur selon l'une quelconque des revendications précédentes, **caractérisé en ce que** le support de palier (3) est réalisé au moins en deux parties et comprend une partie inférieure ainsi qu'un couvercle, l'ouverture (4) pour la réception de l'arbre étant formée par la partie inférieure et le couvercle, et l'au moins un moyen de fixation (5) reliant les uns aux autres le couvercle, la partie inférieure ainsi que le corps de base (1),
les surfaces de contact du couvercle et de la partie inférieure réalisant de préférence un engagement par complémentarité de formes avec une liaison à rainure et languette et l'engagement par complémentarité de formes le long de la ligne (10) ne formant aucune liaison par engagement par complémentarité de formes.

13. Procédé de montage d'un arbre (2) pouvant être reçu et monté à rotation dans un support de palier (3) sur un corps de base (1), le support de palier (3) et le corps de base (1) comprenant un élément d'engagement (7) et une région d'élément conjugué (8) et le support de palier (3) étant relié au corps de base (1) par le biais de moyens de fixation (5), le procédé comportant les étapes suivantes :
- fourniture d'un support de palier (3),
- fourniture d'un corps de base (1) pourvu d'au moins une surface de contact,
- application du support de palier (3) contre la surface de contact (6) du corps de base (1) et, lorsque le support de palier (3) et le corps de base (1) sont réunis, l'élément d'engagement (7) et la région d'élément conjugué (8) venant en prise l'un dans l'autre et le support de palier (3) et le corps de base (1) s'alignant l'un par rapport à l'autre de manière définie en ce qui concerne leur position dans la direction transversale (20) par rapport à l'arbre (2) et en ce qui concerne l'alignement angulaire,
- alignement du support de palier (3) le long de l'axe longitudinal (15) de l'arbre (2) sur le corps de base (1) par déplacement du support de palier (3),
- fixation du support de palier (3) sur le corps de base (1) et fixation de la position dans l'alignement longitudinal (15) du corps de base (1) et du support de palier (3) par insertion d'au moins un moyen de fixation (5),
**caractérisé par**
la déformation élastique et/ou plastique de l'élément d'engagement (7) et/ou de la région d'élément conjugué (8) pendant le premier serrage à fond de l'au moins un moyen de fixation (5).

14. Procédé de fabrication d'un corps de base selon l'une quelconque des revendications 1 à 13, **caractérisé par** l'insertion d'au moins deux régions d'élément conjugué (8) de type rainure dans au moins deux surfaces de contact (6) et/ou régions d'application (13, 13', 13'') différentes d'un corps de base (1) par un déplacement d'avance rectiligne d'un outil d'enlèvement de copeaux, l'outil d'enlèvement de copeaux étant de préférence une fraise à disque, une lame de scie ou un outil similaire à celle-ci.
